# EUROPÄISCHE PATENTSCHRIFT

(11) **EP 2 778 334 B1**
(45) Veröffentlichungstag und Bekanntmachung des Hinweises auf die Patenterteilung: **17.08.2016**
(21) Anmeldenummer: 14000854.1
(22) Anmeldetag: 11.03.2014
(51) Int. Cl.: F24F 12/00, E06B 3/66, E06B 7/02, F24F 13/18

(54) **Lüftungsvorrichtung und Scheibenanordnung**
Ventilation device and pane assembly
Dispositif d'aération et vitrage

(30) Priorität: 14.03.2013 AT 1972013
(43) Veröffentlichungstag der Anmeldung: 17.09.2014
(73) Patentinhaber: Gollner, Johann, 6300 Wörgl (AT)
(72) Erfinder: Gollner, Johann, 6300 Wörgl (AT)
(74) Vertreter: Torggler & Hofinger Patentanwälte

(56) Entgegenhaltungen:
- WO-A1-03/083242
- WO-A1-2008/052314
- DE-A1- 2 608 557
- GB-A- 2 460 426
- US-A1- 2010 243 180

## Beschreibung

Die vorliegende Erfindung betrifft Anordnung aus einer Lüftungsvorrichtung und einer Scheibenanordnung gemäß den Merkmalen des Oberbegriffs des Anspruchs 1 sowie eine Verwendung einer Scheibenanordnung als Teil einer Raumlüftung.

Es ist bekannt, an Fenstern oder Glastüren und dergleichen dezentrale Lüftungsanlagen anzubringen. Dies hat zum Einen den Vorteil, dass solche Lüftungsanlagen nachträglich angebracht werden können, ohne an einem Gebäude aufwändige bauliche Änderungen vornehmen zu müssen. Außerdem ist es durch solche dezentrale Lüftungsanlagen möglich, die Lüftung für einzelne Räume einzustellen, ohne ein komplexes Regelungssystem für ein ganzes Gebäude notwendig zu machen.

Für solche dezentralen Lüftungsvorrichtungen gibt es im Stand der Technik im Wesentlichen zwei Bauweisen.

Die Lüftungsvorrichtung kann in den Rahmen des Fensters oder dergleichen integriert sein. Dies macht natürlich eine Vergrößerung des Rahmens notwendig. Damit einher geht der Nachteil einer verkleinerten Fensterfläche und einer verschlechterten Optik.

Es ist außerdem bekannt, die Scheibenanordnung des Fensters zu durchbrechen und die Lüftungsvorrichtung in der entstandenen Durchgangsöffnung anzuordnen. Eine Scheibenanordnung dieser Art ist in der WO 03/083242 A1 offengelegt. Nachteilig ist hierbei, dass das Isolationsvermögen heute üblicher Mehrfachverglasung kompromittiert wird. Denn es ist äußerst schwierig, nach dem Einlassen der Lüftungsvorrichtung auf diese Art und Weise für eine adäquate Abdichtung zu sorgen, sodass die Isolationsvolumina zwischen den Scheiben der Mehrfachverglasung gasdicht sind. Auch bei dieser Lösung ist die Optik verbesserungswürdig.

Aufgabe der Erfindung ist es, eine Lüftungsvorrichtung, eine Anordnung mit einer Lüftungsvorrichtung und einer Scheibenanordnung sowie eine Verwendung für eine Scheibenanordnung bereit zu stellen, die eine verbesserte Optik gegenüber dem Stand der Technik bietet und das Isolationsvermögen durch Mehrfachscheiben nicht wesentlich verschlechtert.

Diese Aufgabe wird durch eine Anordnung aus einer Lüftungsvorrichtung und einer Scheibenanordnung mit den Merkmalen des Anspruchs 1 sowie eine Verwendung einer Scheibenanordnung gemäß den Merkmalen des Anspruchs 14 gelöst.

Dies geschieht, indem die Lüftungsvorrichtung von dem Isolationsvolumen beabstandet in die Scheibenanordnung eingelassen ist. Mit anderen Worten ragen die Scheiben so über den Randverbund hinaus, dass die Lüftungsvorrichtung in dem entstehenden Raum Platz findet.

Ein weiterer Vorteil ist, dass es möglich wird, einen größeren und dadurch effizienteren Wärmetauscher zu verbauen.

Hinsichtlich der Verwendung einer Scheibenanordnung geschieht dies, indem der durch das Zurückversetzen des Randverbundes entstehende Freiraum als Luftschacht oder Raumlüftung dient.

Eine besonders gute Optik wird erreicht, indem der Randverbund so zurückversetzt ist, das zwischen den zwei Scheiben ein Freiraum besteht, in welchem die Lüftungsvorrichtung zumindest teilweise angeordnet ist.

Vorteilhafte Weiterbildungen der Erfindung sind in den abhängigen Ansprüchen definiert.

Es kann vorgesehen sein, dass für den wenigstens einen Lüfter der Lüftungsvorrichtung ein Radiallüfter verwendet wird, wodurch eine besonders flache Bauweise möglich wird.

Besonders bevorzugt vorgesehen ist, dass genau zwei Radiallüfter vorgesehen sind. Der gewünschte Luftaustausch kann dann besonders einfach gelöst werden, indem für jede Richtung ein Radiallüfter vorgesehen ist.

Um ein gegeneinander Arbeiten von Lüftern zu vermeiden, kann für den wenigstens einen Lüfter je ein Lufteinlass und ein Luftauslass vorgesehen sein.

Um sich der Optik einer Scheibenanordnung gut anzupassen, kann bevorzugt vorgesehen sein, dass der Wärmetauscher flächig ausgebildet ist.

Für eine bessere Isolation im eingebauten Zustand kann vorgesehen sein, dass der wenigstens eine Lüfter und der Wärmetauscher in einem Dämmstoffkörper angeordnet sind. Besonders kostengünstig und einfach kann dieser Dämmstoffkörper aus extrudiertem Polystyrol-Hartschaum (XPS) und/oder expandiertem Polystyrol-Hartschaum (EPS) gefertigt sein. Eine einfache Montage der Lüftungsvorrichtung kann dabei erreicht werden, indem der Dämmstoffkörper zweiteilig ausgeführt ist.

Da eine erfindungsgemäße Lüftungsvorrichtung eine besonders flache Bauweise erlaubt, ist besonders bevorzugt vorgesehen, diese in einer erfindungsgemäßen Scheibenanordnung anzuordnen.

Um Änderungen am Fensterrahmen oder dergleichen komplett zu vermeiden, kann vorgesehen sein, dass die zwei Scheiben Ausnehmungen und/oder Durchgangsöffnungen zum Hindurchführen von Luftströmen aufweisen.

Dabei ist besonders bevorzugt vorgesehen, dass Lufteinlässe und Luftauslässe der Lüftungsvorrichtung an Ausnehmungen und/oder Durchgangsöffnungen der zwei Scheiben angeordnet sind. Es kann dann der Optik zuträglich sein, wenn die Lüftungsvorrichtung an den Ausnehmungen und/oder Durchgangsöffnungen bündig mit Oberflächen der Scheiben angeordnet ist. Dies ist jedoch nicht notwendig und es kann sogar, vorteilhaft sein, wenn beispielsweise Luftauslässe und Lufteinlässe über die Oberflächen der Scheiben stehen.

Indem die Lüftungsvorrichtung im Wesentlichen vollständig in dem Freiraum und/oder den Ausnehmungen und/oder den Durchgangsöffnungen angeordnet ist, ist die erfindungsgemäße Anordnung mit jedem Rahmen kompatibel.

Bei einer Ausführungsform der Erfindung ist an der Scheibenanordnung beabstandet vom Isolationsvolumen ein Solarelement - vorzugsweise ein Photovoltaikelement - angeordnet. Neben der umweltfreundlichen Energieversorgung hat dies den Vorteil, dass die Lüftungsvorrichtung autark mit Energie versorgt wird. Es müssen dann keine Stromkabel oder dergleichen nur für die Lüftungsvorrichtung installiert werden.

Um die Isolationswirkung des Dämmstoffkörpers voll auszunutzen, kann vorgesehen sein, dass der Freiraum vom Dämmstoffkörper vollständig ausgefüllt ist.

Für ein gutes Verhältnis zwischen Isolationsvermögen und Stärke der Scheibenanordnung ist besonders bevorzugt vorgesehen, dass wenigstens - vorzugsweise genau - eine weitere Scheibe zwischen den zwei Scheiben angeordnet ist, wobei die weitere Scheibe vorzugsweise nicht in den Freiraum eindringt.

Bevorzugt kann vorgesehen sein, die zwei Scheiben als Glasscheiben auszuführen.

Dies gilt auch für weitere Scheiben, wobei diese auch aus Kunststoff, insbesondere als Kunststofffolie, ausgeführt sein können.

Weitere Vorteile und Einzelheiten der vorliegenden Erfindung ergeben sich anhand der Figuren sowie der dazugehörigen Figurenbeschreibung. Darin zeigen:

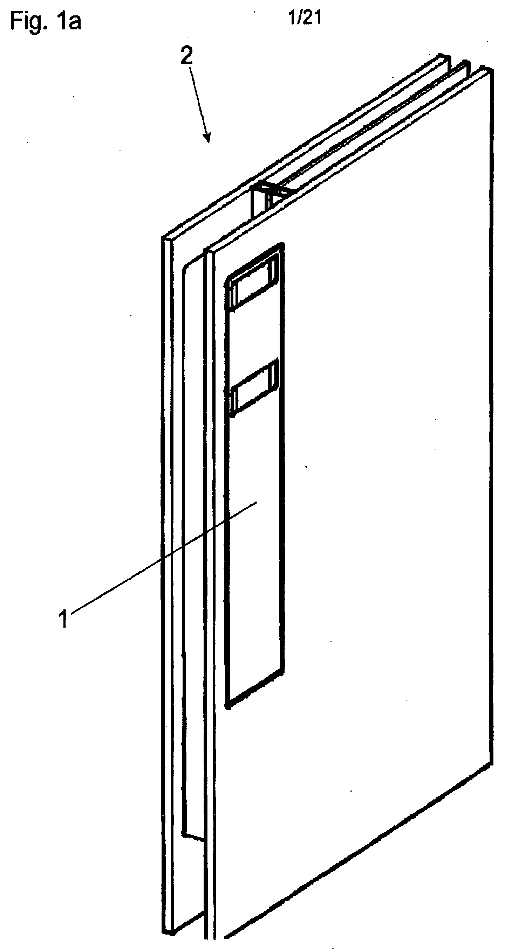

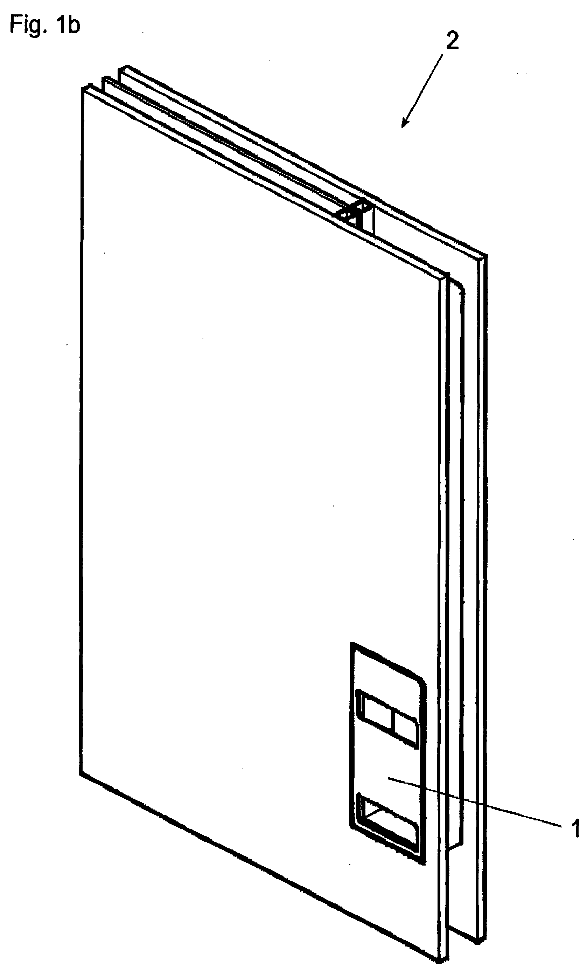

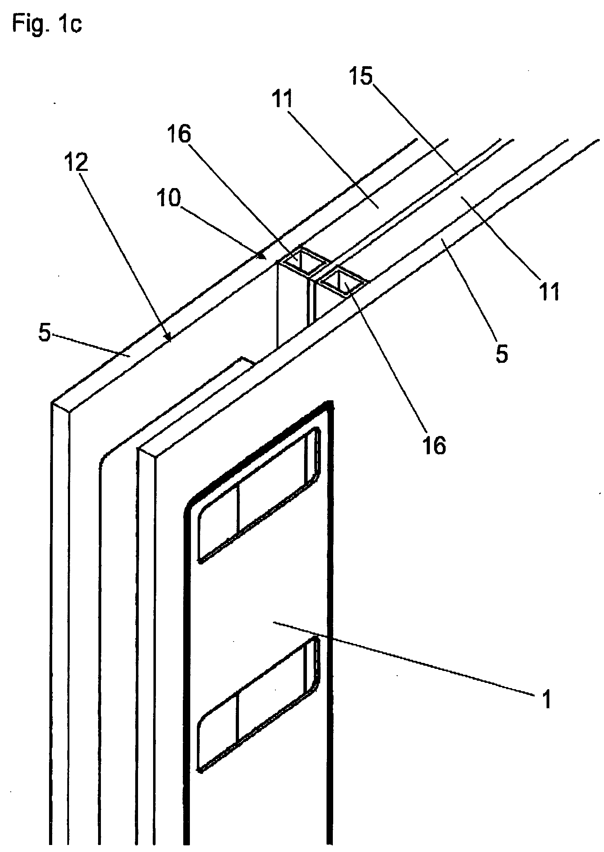

- Fig. 1 a: eine perspektivische Darstellung einer erfindungsgemäßen Anordnung,
- Fig. 1 b: eine weitere perspektivische Darstellung einer erfindungsgemäßen Anordnung,
- Fig. 1 c: eine Detaildarstellung der Ansicht aus Fig. 1 a,
- Fig. 2a: eine erfindungsgemäße Scheibenanordnung in einer Perspektive,
- Fig. 2b: eine erfindungsgemäße Scheibenanordnung aus einer weiteren Perspektive,
- Fig. 3a: eine Schnittdarstellung durch eine erfindungsgemäße Anordnung,
- Fig. 3b und 3c: Detaildarstellungen der Ansicht aus Fig. 3a,
- Fig. 4a bis 4g: verschiedenen Schnitte durch eine erfindungsgemäße Ausführungsform,
- Fig. 5a bis 5g: verschiedene Schnitte durch eine weitere erfindungsgemäße Ausführungsform,
- Fig. 6a bis 6d: schematische Schnitte durch eine erfindungsgemäße Anordnung zur Verdeutlichung der Luftstromwege,
- Fig. 7a bis 7d: verschiedene mögliche Anordnungen des Randverbundes in den Ausführungsformen aus den Fig. 4 und 5,
- Fig. 8: schematisch verschiedene Anordnungen der Lüftungsvorrichtung in einem Fenster,
- Fig. 9: eine Schnittdarstellung einer erfindungsgemäßen Anordnung mit einem Solarelement,
- Fig. 10a und 10b: perspektivische Darstellungen eines zweiteiligen Dämmstoffkörpers,
- Fig. 11a bis 11c: eine Gesamtdarstellung und zwei Detaildarstellungen eines zweiteiligen Dämmstoffkörpers,
- Fig. 12a bis 12h: verschiedene Schnitte, durch eine zusätzliche erfindungsgemäße Ausführungsform,
- Fig. 13a bis 13w: schematische Schnitte durch eine zusätzliche erfindungsgemäße Anordnung zur Verdeutlichung der Luftstromwege sowie
- Fig. 14a und 14b: schematische Darstellungen zur erfindungsgemäßen Verwendung von Scheibenanordnungen bei Raumlüftungen.

In den Figuren 1 a und 1 b ist die erfindungsgemäße Anordnung aus zwei verschiedenen Perspektiven dargestellt. Es ist jeweils die Lüftungsvorrichtung 1 sowie die Scheibenanordnung 2 zu erkennen. Es ist vorgesehen, dass die in Figur 1 a dargestellte Seite dem Innenraum eines Gebäudes zugewandt ist.

In Figur 1c ist eine Detailansicht der Figur 1 a dargestellt, um den Aufbau der Scheibenanordnung zu verdeutlichen. Zwischen den zwei Scheiben 5 ist eine weitere Scheibe 15 angeordnet, wodurch der Raum zwischen den zwei Scheiben 5 in zwei Isolationsvolumina 11 aufgeteilt ist.

Der Randverbund 10 besteht im Wesentlichen aus zwei Abstandhaltern 16 zusammen mit nicht dargestelltem Klebe- und Abdichtmaterial.

Der Randverbund 10 ist so zurückversetzt, dass ein Freiraum 12 zwischen den zwei Scheiben 5 entsteht.

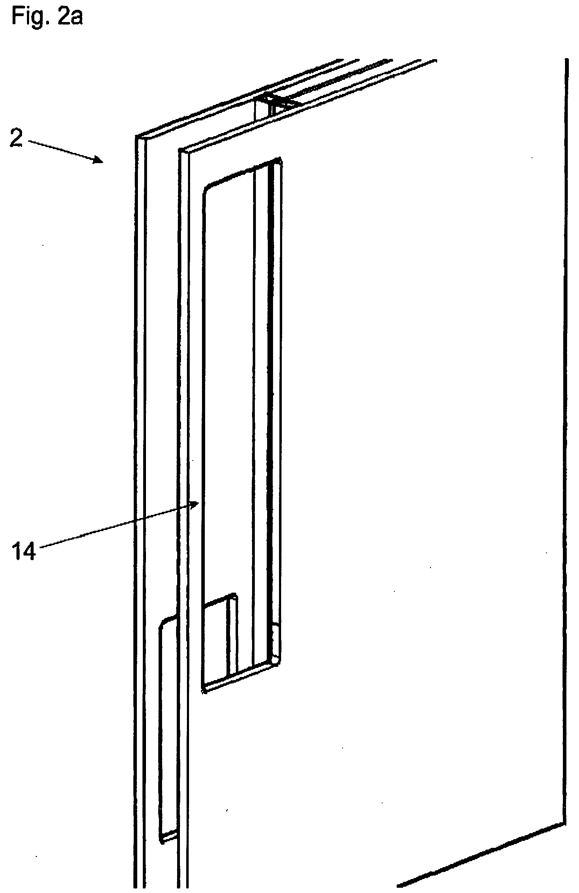

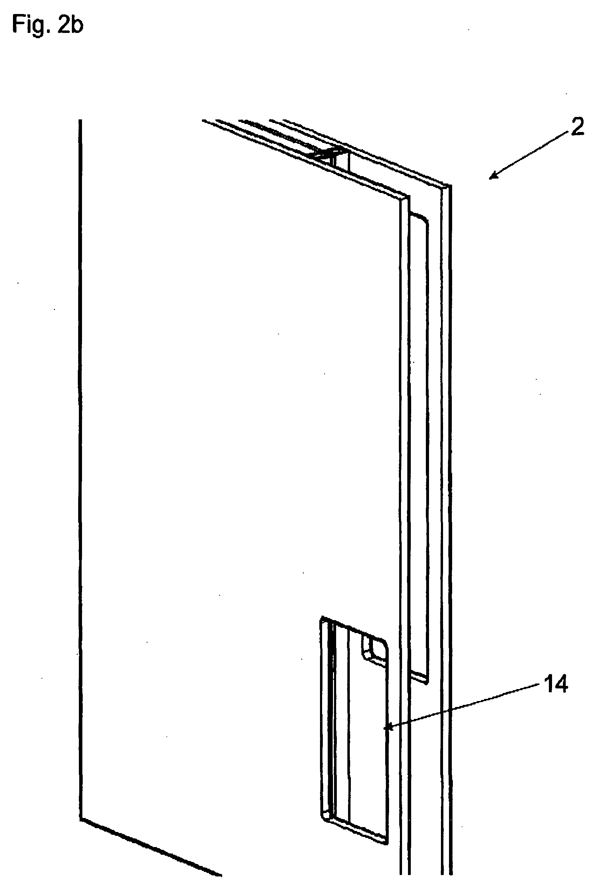

In den Figuren 2a und 2b sind zwei perspektivische Darstellungen der Scheibenanordnungen, in die eine Lüftungsvorrichtung anzuordnen ist, gezeigt. Zu erkennen ist jeweils eine Durchgangsöffnung 14 durch die zwei Scheiben 5 zum Hindurchführen von Luftströmen.

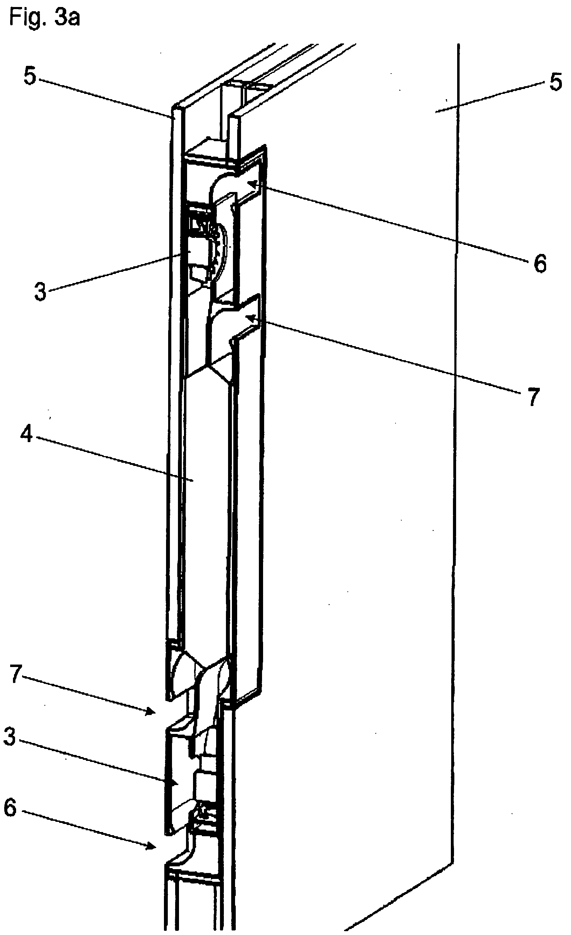

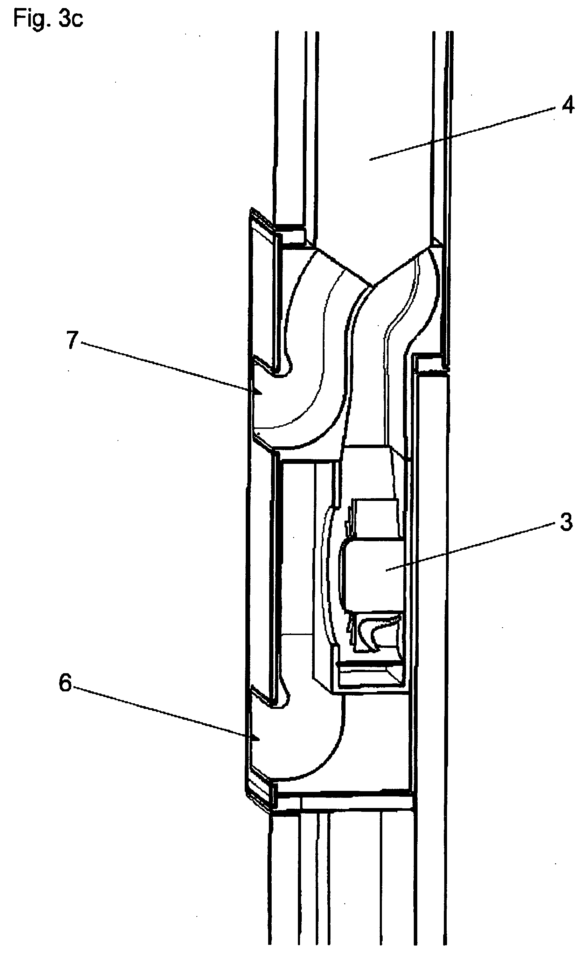

Figur 3a zeigt eine Schnittdarstellung durch eine erfindungsgemäße Anordnung aus einer Lüftungsvorrichtung 1 und einer Scheibenanordnung 2. Über die Lufteinlässe 6 fördern zwei Radiallüfter 3 Luftströme durch den Wärmetauscher 4.

Durch die Luftauslässe 7 verlassen die Luftströme dann den Lüfter auf der anderen Seite der zwei Scheiben 5.

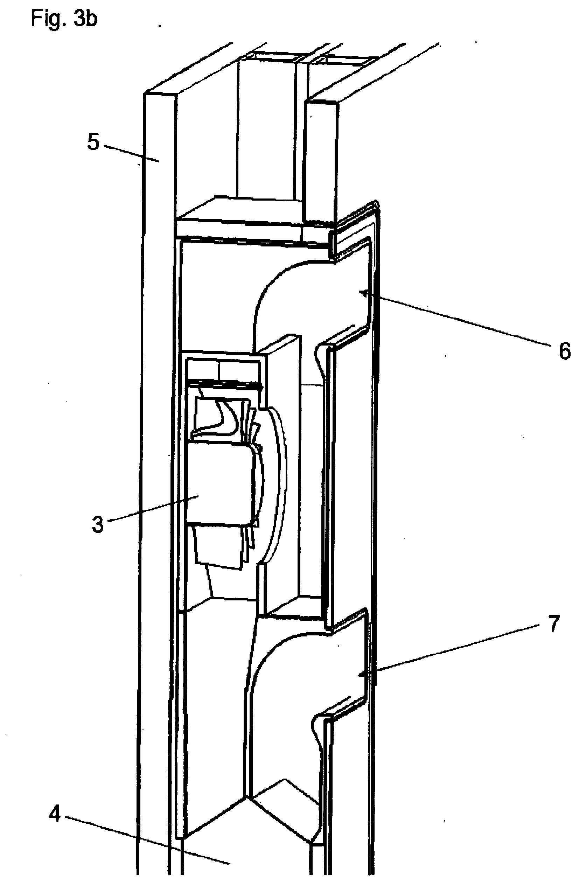

Figuren 3a und 3b sind Detaildarstellungen, in denen die Geometrie der Lufteinlässe 6, der Luftauslässe 7 sowie der Radiallüfter 3 noch deutlicher zu erkennen sind.

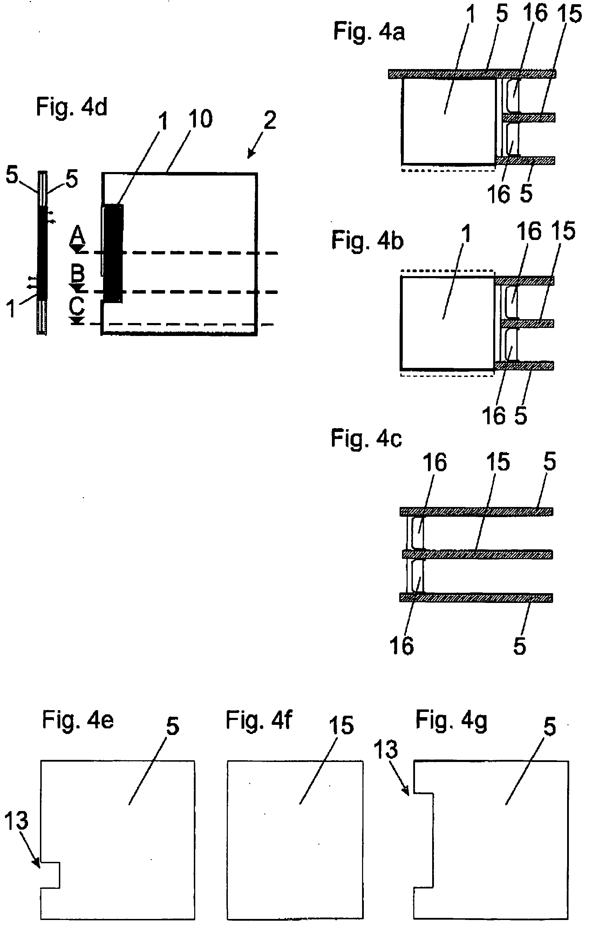

In Figur 4d sind schematische Aufrissdarstellungen einer erfindungsgemäßen Anordnung aus einer Lüftungsvorrichtung 1 und einer Scheibenanordnung 2 zu erkennen. Hierdurch wird die Führung des Randverbundes 10 deutlich.

Der Scheibenverbund 2 umfasst die zwei Scheiben 5, die in den Figuren 4e und 4g dargestellt sind, sowie die weitere Scheibe 15, die in Figur 4f dargestellt ist.

Die Figuren 4a, 4b und 4c zeigen Schnittdarstellungen der in Figur 4d eingezeichneten Schnitte A, B bzw. C. In Figur 4a ist zu erkennen, dass die Abstandhalter 16, welche den Randverbund 10 im Wesentlichen bilden, sowie eine der zwei Scheiben 5 zurückversetzt sind. In dem dadurch entstehenden Raum findet die Lüftungsvorrichtung 1 Platz. In diesem Ausführungsbeispiel ist die Lüftungsvorrichtung 1 bündig mit der Oberfläche einer der zwei Scheiben 5. Ein kleiner Überstand kann aber ohne Weiteres vorgesehen sein, was strichliert angedeutet ist.

In der Figur 4b sind die Ränder beider Scheiben 5 zurückversetzt. Es wäre aber durchaus auch möglich, hier nur den Rand der Scheibe 5 zurückzuversetzen, der in Figur 4a nicht zurückversetzt war.

In der in Figur 4c dargestellten Ebene C sind sowohl der Randverbund 10 als auch die beiden Scheiben 5 sowie die weitere Scheibe 15 nicht zurückversetzt.

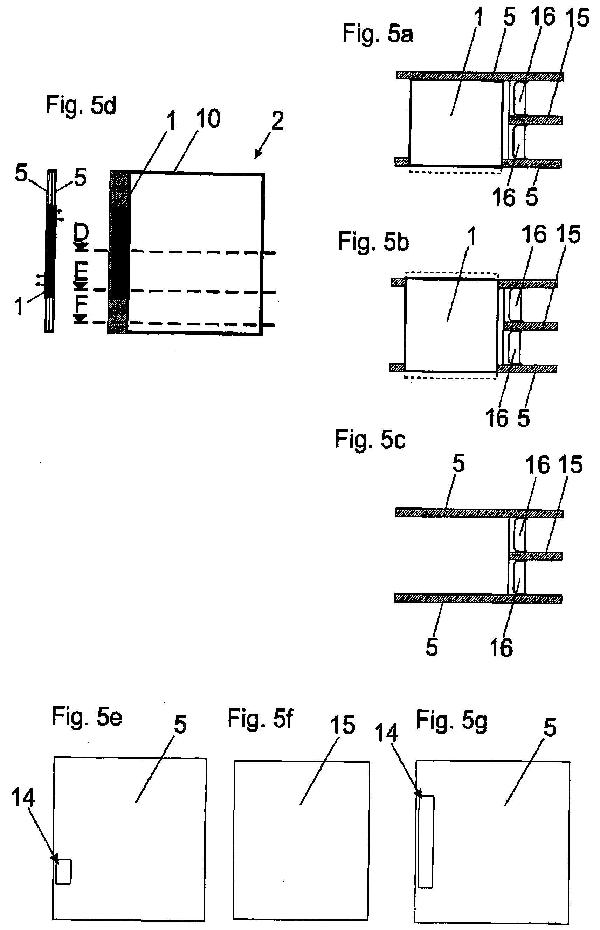

In den beiden in den Figuren 4 und 5 dargestellten Ausführungsformen sind die Scheiben jeweils als Glasscheiben ausgebildet.

Die Figuren 5 sind denen aus den Figuren 4 analog, wobei der Schnitt aus Figur 5a zur Ebene D, der Schnitt aus Figur 5b zur Ebene E und der Schnitt aus Figur 5c zur Ebene F gehört. Der wesentliche Unterschied besteht darin, dass die Luftströme hier nicht durch Ausnehmungen 13 sondern durch Durchgangsöffnungen 14 geführt werden. Außerdem ist eine andere Kontur des Randverbundes gewählt, was in Figur 5d zu erkennen ist. Auch hier sind in den Schnitten 5a und 5b mögliche Überstände strichliert angedeutet.

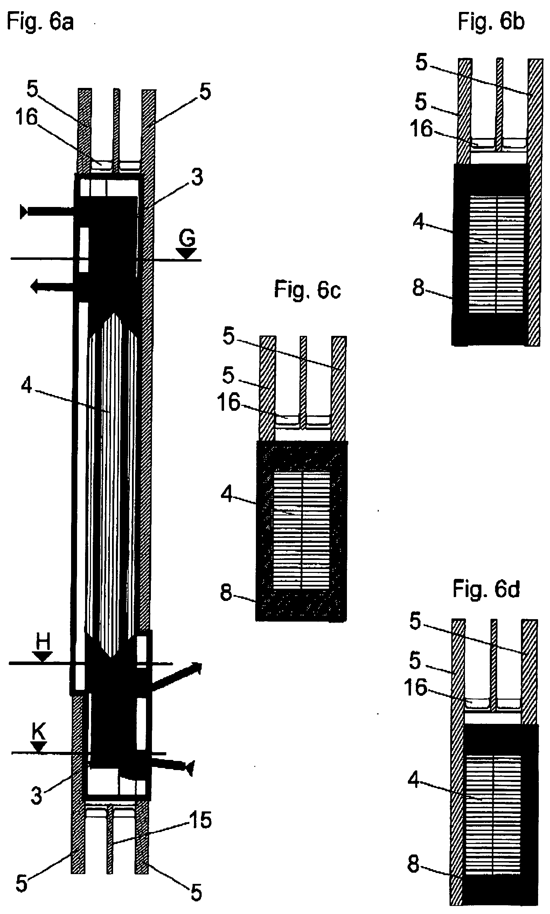

Figur 6a ist eine weitere schematische Schnittdarstellung einer Ausführungsform, die der aus den Figuren 4 ähnelt. Die Luftströme sind durch Pfeile angedeutet. Der Übersichtlichkeit halber sind die Radiallüfter 3 nur schematisch als schattierte Bereiche dargestellt. Wie in den Schnitten durch die Ebenen G (Figur 6b), H (Figur 6c) und K (Figur 6d) zu erkennen ist, ist ein Dämmstoffkörper 8, in dem die Lüftungsvorrichtung 1 angeordnet ist, vorgesehen. Dieser besteht aus XPS und füllt den durch das Zurückversetzen der Ränder der zwei Scheiben 5 sowie des Randverbunds 10, welcher aus Abstandhaltern 16 besteht, vollständig aus. Der Wärmetauscher 4 ist im Gegenstromkanalprinzip ausgebildet.

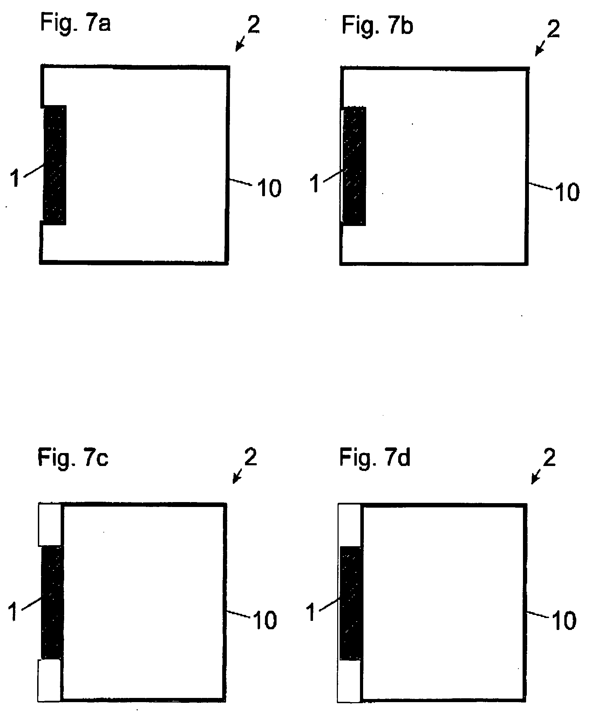

In den Figuren 7a bis 7d sind schematische Aufrissdarstellungen erfindungsgemäßer Anordnungen aus Lüftungsvorrichtungen 1 und Scheibenanordnungen 2 dargestellt. Zu erkennen sind verschiedene mögliche Konturen für den Randverbund 10. Entweder wird dieser so eng wie möglich um die Lüftungsvorrichtung 1 geführt. Dies ist in beiden Ausführungsformen aus den Figuren 4 und 5 möglich (siehe Figur 7a bzw. 7b). Aus optischen Gründen kann es aber auch vorgesehen sein, den Randverbund 10 entlang einer gesamten Kante zurückzuversetzen, um eine rechteckige Kontur zu erreichen. Auch dies ist in den beiden Ausführungsformen aus den Figuren 4 und 5 möglich (siehe Figur 7c bzw. 7d).

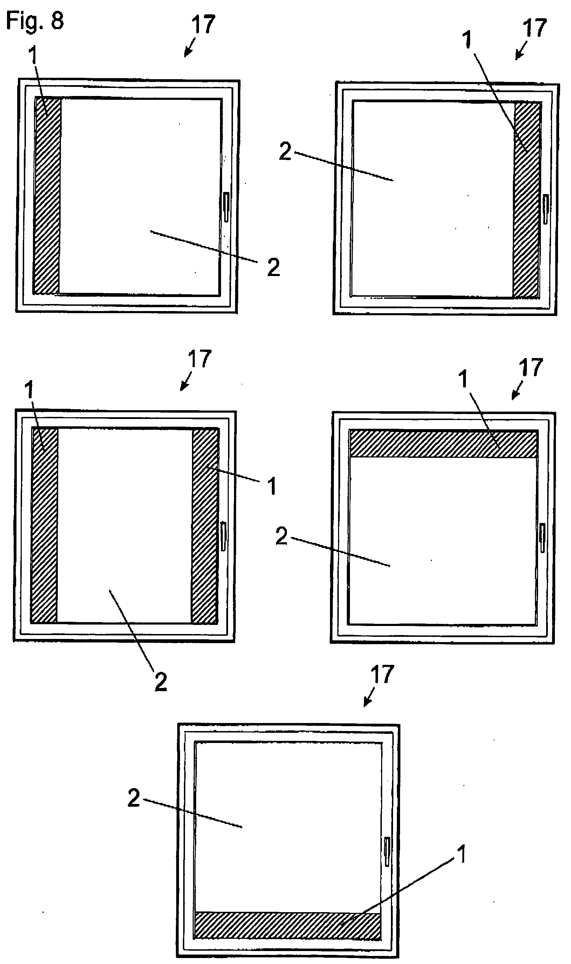

In der Figur 8 werden verschiedene mögliche Anordnungen für die Lüftungsvorrichtung 1 in einer Scheibenanordnung 2 und einem Fenster 17 dargestellt, was nicht beschränkend verstanden werden soll. Außerdem ist die Erfindung nicht auf Fenster beschränkt. Die erfindungsgemäße Anordnung aus einer Lüftungsvorrichtung 1 und einer Scheibenanordnung 2 kann natürlich auch für bspw. Terrassentüren oder jegliches andere Anwendungsgebiet, bei dem der Einsatz von Mehrfachverglasung sinnvoll ist, eingesetzt werden.

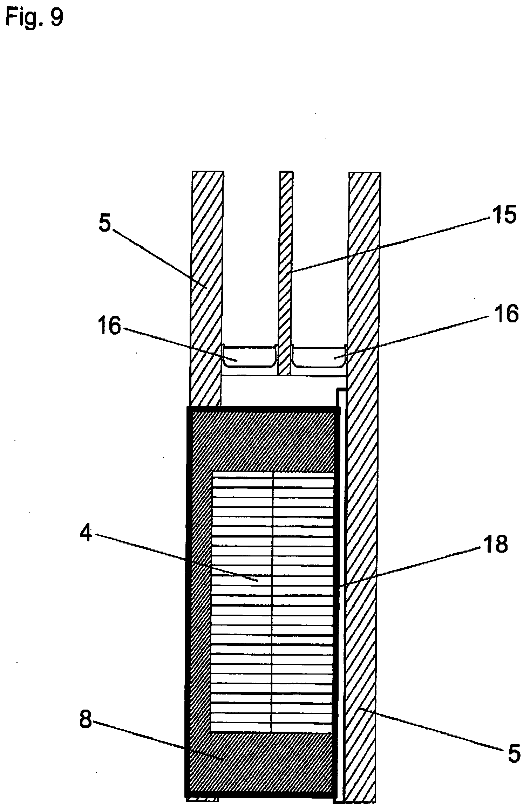

Figur 9 macht deutlich wie bei einer Ausführungsform der Erfindung ein Solarelement angeordnet 18 angeordnet ist. Exemplarisch ist nur ein Schnitt dargestellt, der dem aus Figur 6b entspricht. Bei dieser Ausführungsform kann das Solarelement 18 über die ganze Höhe der Scheibenanordnung 2 ausgedehnt sein. Auch hier macht es Sinn den Randverbund 10 der Scheibenanordnung 2 nicht durch das Solarelement durchbrechen zu lassen, da dies die Integrität des Isolationsvolumens 11 stören kann.

Das Solarelement 18 ist hier als Photovoltaikelement ausgebildet. Da dies eine direkte Stromproduktion ermöglicht, kann die Lüftungsvorrichtung völlig autark versorgt werden, indem die von dem Photovoltaikelement produzierte elektrische Energie zum Betreiben der Lüftungsvorrichtung verwendet wird.

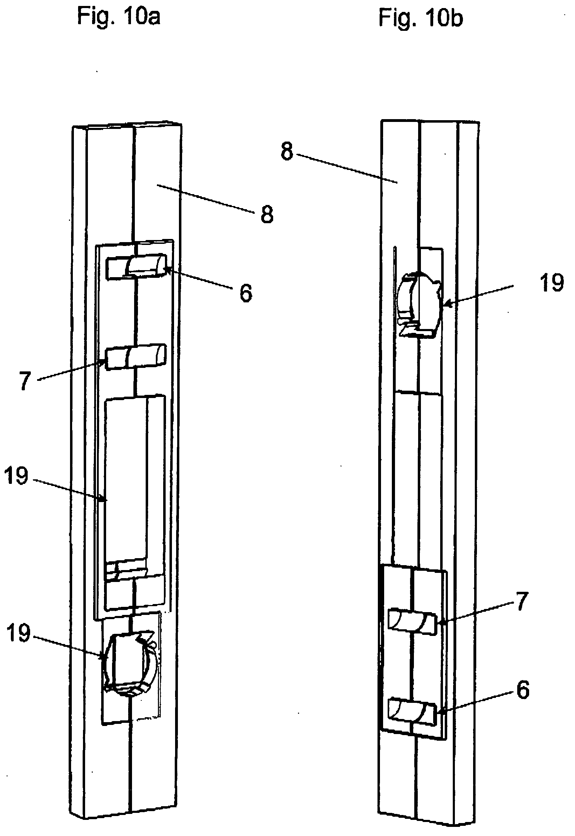

Die Figuren 10a und 10b zeigen einen Dämmstoffkörper 8, welcher aus zwei Teilen besteht aus zwei verschiedenen Perspektiven. Der Dämmstoffkörper 8 weist Kavitäten 19 auf, in welchen die Radiallüfter 3 sowie der Wärmetauscher 4 Platz finden. Außerdem sind die Lufteinlässe 6 sowie die Luftauslässe 7 in dem Dämmstoffkörper 8 ausgebildet.

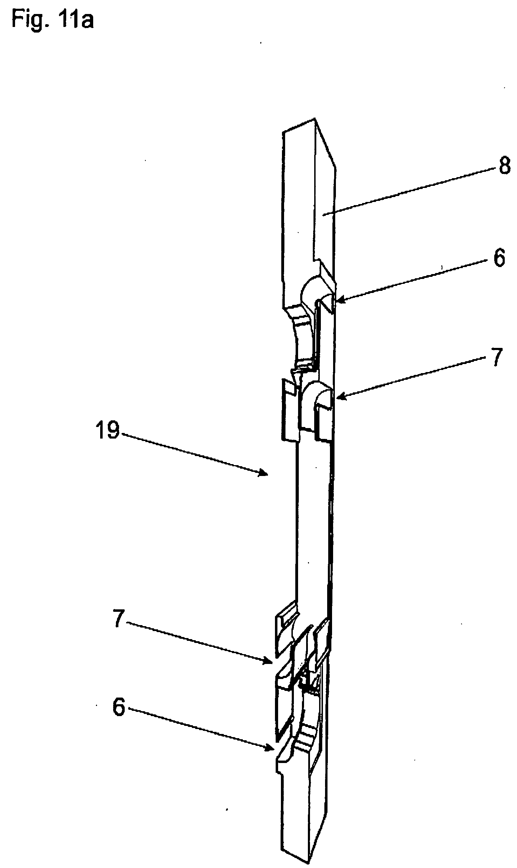

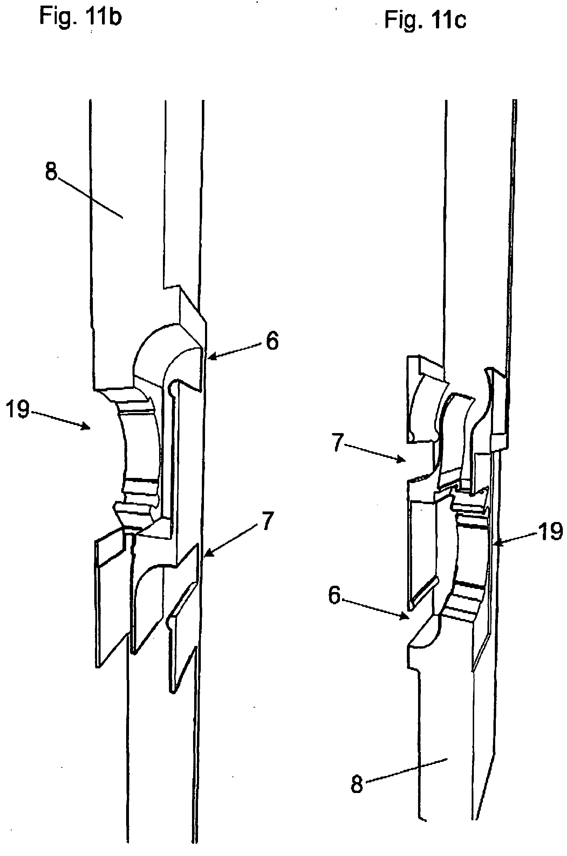

In den Figuren 11a bis 11c ist nun eine Hälfte des zweiteiligen Dämmstoffkörpers in verschiedenen Darstellungen gezeigt. Die zu bildenden Kavitäten 19, die Lufteinlässe 6 und die Luftauslässe 7 sind auch hier deutlich zu erkennen. Durch die Zweiteilung des Dämmstoffkörpers 8 können alle Bauteile der Lüftungsvorrichtung 1 in diesem montiert werden, ohne dass viele Fugen im Dämmstoffkörper 8 die Isolationsfähigkeit desselben nachteilig beeinflussen würden. Der gezeigte Dämmstoffkörper 8 kann in einer Ausführungsform der Erfindung, wie sie beispielsweise in den Figuren 6a bis 6d gezeigt ist Verwendung finden und sämtliche vorhandene Freiräume oder dergleichen ausfüllen, um die Wärmeisolation zu optimieren.

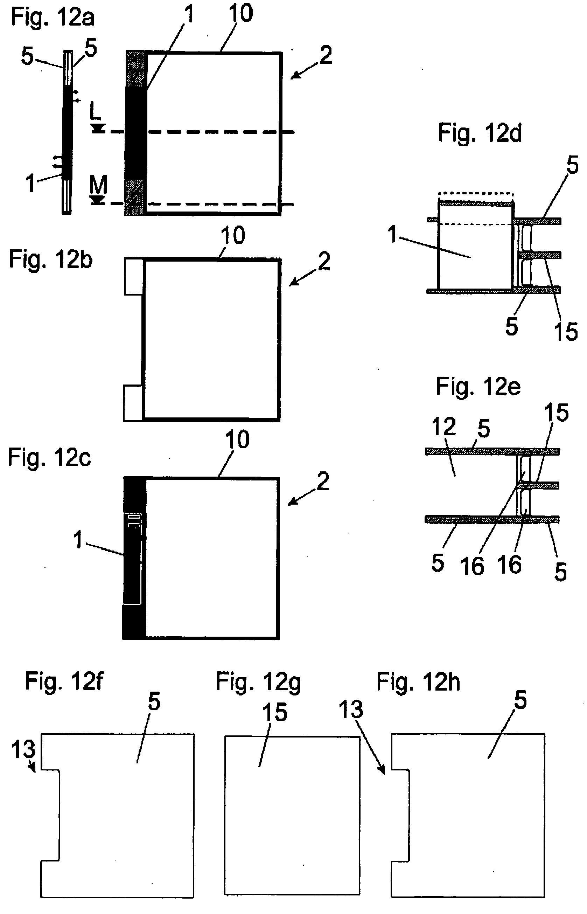

Die Figuren 12a bis 12h sind im Wesentlichen analog zu den Figuren 4a bis 4g, wobei zwei zusätzliche Darstellungen (Figur 12b und 12c) vorhanden sind, welche die beiden Scheiben 5 von je unterschiedlichen Seiten darstellen, wobei die Lage des Randverbundes 10 dargestellt ist.

Ein Unterschied zwischen der Ausführungsform aus den Figuren 4a bis 4g und der aus den Figuren 12a bis 12h besteht darin, dass die Lüftungsvorrichtung 1 in diesem Fall nicht bündig mit den Scheiben 5 abschließt. Hierzu sei auf die Figur 12d verwiesen, welche einen Schnitt durch die in Figur 12a eingezeichnete Ebene L zeigt.

Wie in Figur 12e, ein Schnitt durch die in Figur 12a dargestellte Ebene M, zu erkennen ist, erstreckt sich der angesprochene Überstand nur auf die Ausdehnung der Lüftungsvorrichtung 1.

Ein weiterer Unterschied besteht darin, dass die Ausnehmungen13 für beide Scheiben 5 gleiche Form haben.

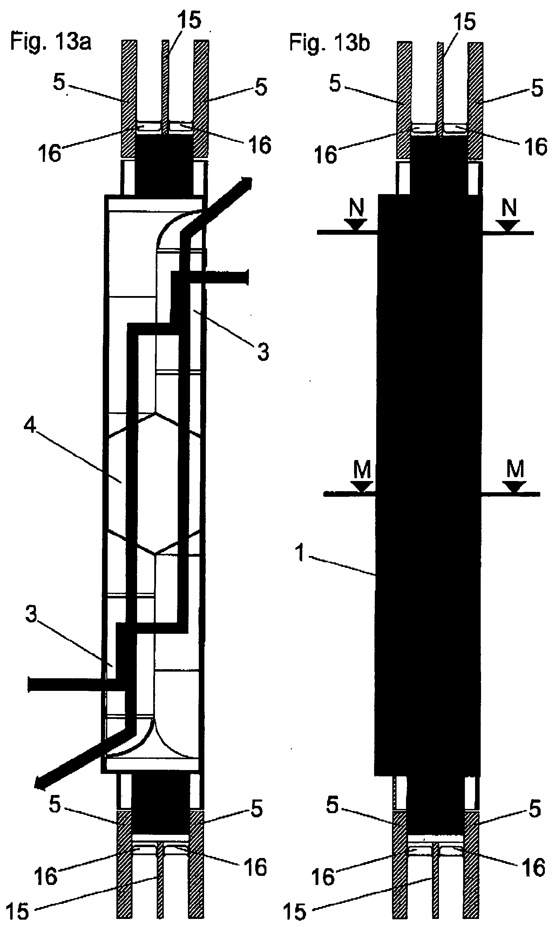

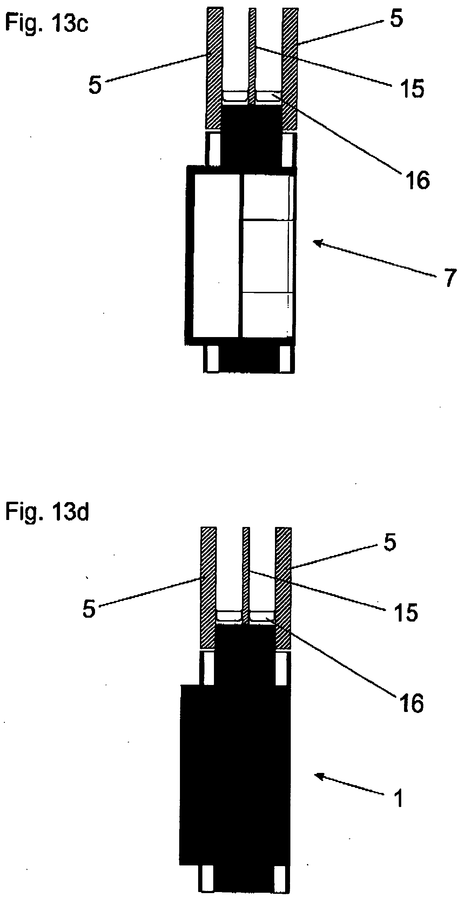

Die in den Figuren 13a bis 13d dargestellte Ausführungsform ist ähnlich zu jener aus den Figuren 6a bis 6d, wobei ein Unterschied darin besteht, dass die Lüftungsvorrichtung 1 ebenfalls über die Scheiben 5 hinaus steht, also nicht bündig mit diesen abschließt. Hierdurch steht für die Lüftungsvorrichtung 1 mehr Platz zur Verfügung, was den Verbau eines handelsüblichen Wärmetauschers 4 ermöglicht. Die geänderten Luftstromwege sind erneut durch Pfeile angedeutet. Figur 13c ist eine Schnittdarstellung durch die Ebene N, welche in der Figur 13b dargestellt ist. Figur 13d ist eine Schnittdarstellung durch die Ebene M aus Figur 13b.

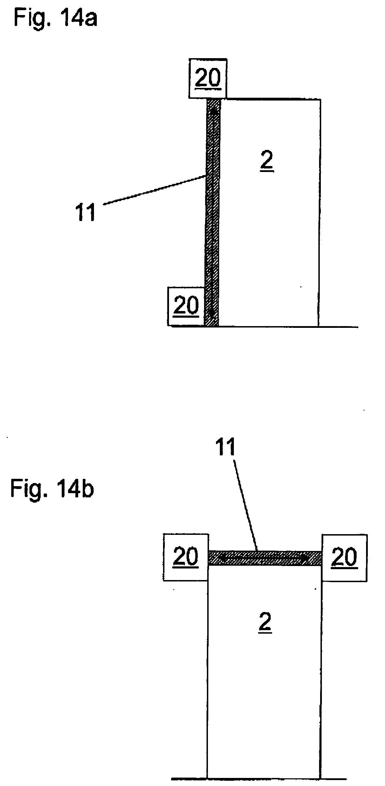

Bei den Figuren 14a und 14b handelt es sich um schematische Darstellungen. Der in der Scheibenanordnung 2 durch das Zurückversetzen des Randverbundes 10 auftretende Freiraum 2 dient hier nicht der Aufnahme einer Lüftungsvorrichtung 1 selbst. Vielmehr dient dieser Freiraum 11 als Luftschacht zwischen Teilen einer Raumlüftung 20. Dabei ist es natürlich nicht wesentlich, ob der Freiraum 11 vertikal (Figur 14a) oder horizontal (Figur 14b) ausgerichtet ist. Diese Ausführungsform erlaubt es, ebenfalls die baulichen Maßnahmen, welche beim Einbau einer Raumlüftung 20 notwendig sind, zu minimieren bei gleichzeitig stark verbesserter Optik.

## Patentansprüche

1. Anordnung aus einer Lüftungsvorrichtung (1) und einer über zwei im Wesentlichen parallel angeordnete Scheiben verfügende Scheibenanordnung (2), wobei zwischen den zwei Scheiben (5) mit Hilfe eines Randverbundes (10) wenigstens ein Isolationsvolumen (11) eingeschlossen ist, wobei die Lüftungsvorrichtung (1) von dem Isolationsvolumen (11) beabstandet in die Scheibenanordnung (2) eingelassen ist, **dadurch gekennzeichnet, dass** der Randverbund (10) so zurückversetzt ist, dass zwischen den zwei Scheiben (5) ein Freiraum (12) besteht, in welchem die Lüftungsvorrichtung (1) zumindest teilweise angeordnet ist.

2. Anordnung nach Anspruch 1, **dadurch gekennzeichnet, dass** die zwei Scheiben (5) Ausnehmungen (13) und/oder Durchgangsöffnungen (14) zum Hindurchführen von Luftströmen aufweisen.

3. Anordnung nach Anspruch 1 oder 2, **dadurch gekennzeichnet, dass** die Lüftungsvorrichtung (1) im Wesentlichen vollständig in dem Freiraum (12) und/oder den Ausnehmungen (13) und/oder den Durchgangsöffnungen (14) angeordnet ist.

4. Anordnung nach wenigstens einem der Ansprüche 1 bis 3, **dadurch gekennzeichnet, dass** das wenigstens eine Isolationsvolumen (11) mit Hilfe des Randverbundes (10) im Wesentlichen gasdicht abgeschlossen ist.

5. Anordnung nach wenigstens einem der Ansprüche 1 bis 4, **dadurch gekennzeichnet, dass** wenigstens - vorzugsweise genau - eine weitere Scheibe (15) zwischen den zwei Scheiben (5) angeordnet ist, wobei die weitere Scheibe (15) vorzugsweise nicht in den Freiraum (12) eindringt.

6. Anordnung nach einem der Ansprüche 1 bis 5, mit einem Wärmetauscher (4), wobei mittels des wenigstens einen Lüfters wenigstens ein Luftstrom durch den Wärmetauscher (4) transportierbar ist, **dadurch gekennzeichnet, dass** der wenigstens eine Lüfter als Radiallüfter (3) ausgebildet ist.

7. Anordnung nach Anspruch 6, **dadurch gekennzeichnet, dass** genau zwei Radiallüfter (3) vorgesehen sind.

8. Anordnungnach Anspruch 6 oder 7, **dadurch gekennzeichnet, dass** der Wärmetauscher (4) flächig ausgebildet ist.

9. Anordnung nach wenigstens einem der Ansprüche 6 bis 8, **dadurch gekennzeichnet, dass** der wenigstens eine Lüfter und der Wärmetauscher (4) in einem Dämmstoffkörper (8) angeordnet sind.

10. Anordnung nach Anspruch 9, **dadurch gekennzeichnet, dass** der Dämmstoffkörper (8) aus extrudiertem Polystyrol-Hartschaum (XPS) und/oder expandiertem Polystyrol-Hartschaum (EPS) gefertigt ist.

11. Anordnung nach Anspruch 9 oder 10, **dadurch gekennzeichnet, dass** der Dämmstoffkörper (8) zweiteilig ausgeführt ist.

12. Anordnung nach Anspruch 3 und einem der Ansprüche 9 bis 11, **dadurch gekennzeichnet, dass** der Freiraum (12) vom Dämmstoffkörper (8) vollständig ausgefüllt ist.

13. Anordnung nach einem der Ansprüche 1 bis 12, **dadurch gekennzeichnet, dass** eine Drehachse des Radiallüfters (3) im Wesentlichen senkrecht auf eine Ebene der Scheibenanordnung (2) steht.

14. Verwendung einer Scheibenanordnung (11) als Teil einer Raumlüftung (20) mit wenigstens zwei im Wesentlichen parallel angeordneten Scheiben (5) und einem mit Hilfe eines Randverbundes (10) zwischen den Scheiben (5) eingeschlossenen Isolationsvolumen (11), **dadurch gekennzeichnet, dass** der Randverbund (10) so von einem Rand der zwei Scheiben (5) zurückversetzt ist, dass zwischen den zwei Scheiben (5) ein Freiraum (12) besteht, und der Freiraum (12) als Luftschacht der Raumlüftung (20) dient.

## Claims

1. An arrangement comprising a ventilation device (1) and a pane arrangement (2) having two panes arranged substantially parallel, wherein at least one insulation volume (11) is enclosed between the two panes (5) by means of an edge seal (10), wherein the ventilation device (1) is let into the pane arrangement (2) in spaced relationship from the insulation volume (11) **characterised in that** the edge seal (10) is so set back that between the two panes (5) there is a free space (12) in which the ventilation device (1) is at least partially arranged.

2. An arrangement according to claim 1 **characterised in that** the two panes (5) have recesses (13) and/or passage openings (14) for air flows to be passed therethrough.

3. An arrangement according to claim 1 or claim 2 **characterised in that** the ventilation device (1) is arranged substantially completely in the free space (12) and/or the recesses (13) and/or the passage openings (14).

4. An arrangement according to at least one of claims 1 to 3 **characterised in that** the at least one insulation volume (11) is substantially gas-tightly closed off by means of the edge seal (10).

5. An arrangement according to one of claims 1 to 4 **characterised in that** at least - preferably precisely - one further pane (15) is arranged between the two panes (5), wherein the further pane (15) preferably does not penetrate into the free space (12).

6. An arrangement according to one of claims 1 to 5 having a heat exchanger (4), wherein at least one air flow can be transported through the heat exchanger (4) by means of the at least one fan, **characterised in that** the at least one fan is in the form of a radial fan (3).

7. An arrangement according to claim 6 **characterised in that** there are provided precisely two radial fans (3).

8. An arrangement according to claim 6 or claim 7 **characterised in that** the heat exchanger (4) is flat.

9. An arrangement according to at least one of claims 6 to 8 **characterised in that** the at least one fan and the heat exchanger (4) are arranged in an insulating material body (8).

10. An arrangement according to claim 9 **characterised in that** the insulating material body (8) is produced from extruded polystyrene hard foam (XPS) and/or expanded polystyrene hard foam (EPS).

11. An arrangement according to claim 9 or claim 10 **characterised in that** the insulating material body (8) is of a two-part configuration.

12. An arrangement according to claim 3 and one of claims 9 to 11 **characterised in that** the free space (12) is completely filled up by the insulating material body (8).

13. An arrangement according to one of claims 1 to 12 **characterised in that** an axis of rotation of the radial fan (3) is substantially perpendicular to a plane of the pane arrangement (2).

14. Use of a pane arrangement (11) as part of a room ventilation arrangement (20) comprising at least two panes (5) which are arranged substantially parallel and an insulation volume (11) enclosed between the panes (5) by means of an edge seal (10), **characterised in that** the edge seal (10) is so set back from an edge of the two panes (5) that there is a free space (12) between the two panes (5) and the free space (12) serves as an air shaft of the room ventilation arrangement (20).

## Revendications

1. Ensemble composé d'un dispositif d'aération (1) et d'un ensemble de vitres (2) disposant de deux vitres disposées essentiellement de manière parallèle, dans lequel au moins un volume d'isolation (11) est enfermé entre les deux vitres (5) à l'aide d'un bord composite (10), dans lequel le dispositif d'aération (1) est inséré dans l'ensemble de vitres (2) à distance du volume d'isolation (11), **caractérisé en ce que** le bord composite (10) est en retrait de manière à conserver un espace dégagé (12) entre les deux vitres (5), dans lequel le dispositif d'aération (1) est disposé au moins en partie.

2. Ensemble selon la revendication 1, **caractérisé en ce que** les deux vitres (5) présentent des évidements (13) et/ou des ouvertures de passage (14) servant à faire passer de part en part des flux d'air.

3. Ensemble selon la revendication 1 ou 2, **caractérisé en ce que** le dispositif d'aération (1) est disposé essentiellement totalement dans l'espace dégagé (12) et/ou dans les évidements (13) et/ou dans les ouvertures de passage (14).

4. Ensemble selon au moins l'une quelconque des revendications 1 à 3, **caractérisé en ce que** l'au moins un volume d'isolation (11) est isolé essentiellement de manière étanche aux gaz à l'aide du bord composite (10).

5. Ensemble selon au moins l'une quelconque des revendications 1 à 4, **caractérisé en ce qu'**au moins - de préférence exactement - une autre vitre (15) est disposée entre les deux vitres (5), dans lequel l'autre vitre (15) ne pénètre pas de préférence dans l'espace dégagé (12).

6. Ensemble selon l'une quelconque des revendications 1 à 5, comprenant un échangeur de chaleur (4), dans lequel au moins un flux d'air peut être transporté par l'échangeur de chaleur (4) au moyen de l'au moins un ventilateur, **caractérisé en ce que** l'au moins un ventilateur est réalisé sous la forme d'un ventilateur radial (3).

7. Ensemble selon la revendication 6, **caractérisé en ce que** sont prévus exactement deux ventilateurs radiaux (3).

8. Ensemble selon la revendication 6 ou 7, **caractérisé en ce que** l'échangeur de chaleur (4) est réalisé à plat.

9. Ensemble selon au moins l'une quelconque des revendications 6 à 8, **caractérisé en ce que** l'au moins un ventilateur et l'échangeur de chaleur (4) sont disposés dans un corps de matériau isolant (8).

10. Ensemble selon la revendication 9, **caractérisé en ce que** le corps en matériau isolant (8) est fabriqué à partir d'une mousse dure en polystyrène extrudée (XPS) et/ou à partir d'une mousse dure en polystyrène expansée (EPS).

11. Ensemble selon la revendication 9 ou 10, **caractérisé en ce que** le corps en matériau isolant (8) est réalisé en deux parties.

12. Ensemble selon la revendication 3 et selon l'une quelconque des revendications 9 à 11, **caractérisé en ce que** l'espace dégagé (12) est rempli totalement de corps de matériau isolant (8).

13. Ensemble selon l'une quelconque des revendications 1 à 12, **caractérisé en ce qu'**un axe de rotation du ventilateur radial (3) se trouve essentiellement de manière perpendiculaire sur le plan de l'ensemble de vitres (2).

14. Utilisation d'un ensemble de vitres (11) comme partie d'une aération de pièce (20) comprenant au moins deux vitres (5) disposées essentiellement de manière parallèle et un volume d'isolation (11) renfermé entre les vitres (5) à l'aide d'un bord composite (10), **caractérisée en ce que** le bord composite (10) est décalé d'un bord des deux vitres (5) de manière à conserver un espace dégagé (12) entre les deux vitres (5), et **en ce que** l'espace dégagé (12) fait office de puits de sortie d'air de l'aération de pièce (20).
